# EUROPÄISCHE PATENTSCHRIFT

(11) **EP 3 815 509 B1**
(45) Veröffentlichungstag und Bekanntmachung des Hinweises auf die Patenterteilung: **17.04.2024**
(21) Anmeldenummer: 19205819.6
(22) Anmeldetag: 29.10.2019
(51) Int. Cl.: A01G 3/037, A01G 3/053, A01G 3/06, A01G 3/08, A01D 34/90

(54) **HANDGEFÜHRTES GARTEN-, FORST- UND/ODER BAUBEARBEITUNGSGERÄT UND VERFAHREN FÜR EIN HANDGEFÜHRTES GARTEN-, FORST- UND/ODER BAUBEARBEITUNGSGERÄT**
MANUALLY GUIDED GARDEN, FORESTRY AND / OR CONSTRUCTION MACHINERY AND METHOD FOR A MANUALLY GUIDED GARDEN, FORESTRY AND / OR CONSTRUCTION MACHINERY
APPAREIL PORTATIF DE TRAITEMENT DU JARDIN, DE LA FORÊT ET / OU DE LA CONSTRUCTION ET PROCÉDÉ POUR UN APPAREIL PORTATIF DE TRAITEMENT DU JARDIN, DE LA FORÊT ET / OU DE LA CONSTRUCTION

(43) Veröffentlichungstag der Anmeldung: 05.05.2021
(73) Patentinhaber: Andreas Stihl AG & Co. KG, 71336 Waiblingen (DE)
(72) Erfinder: Förstner, Dirk, 70191 Stuttgart (DE); Ehrler, Denis, 73249 Wernau (DE); Varga, Michael, 70180 Stuttgart (DE)
(74) Vertreter: Patentanwälte Ruff, Wilhelm, Beier, Dauster & Partner mbB

(56) Entgegenhaltungen:
- US-A1- 2016 149 520

## Beschreibung

### ANWENDUNGSGEBIET UND STAND DER TECHNIK

Die Erfindung bezieht sich auf ein handgeführtes Garten-, Forst- und/oder Baubearbeitungsgerät und ein Verfahren für ein solches handgeführtes Garten-, Forst- und/oder Baubearbeitungsgerät.

Die US 2016/0149520 A1 offenbart ein motorbetriebenes Gerät aufweisend einen Motor, einen Antriebsschalter, einen Rückwärtsschalter und eine Steuereinheit. Die Steuereinheit ist zum Antreiben des Motors in einer Rückwärtsrichtung, wenn ein Antriebsbefehl über den Antriebsschalter eingegeben wird, nachdem ein Rückwärtsbefehl über den Rückwärtsschalter eingegeben worden ist, und zum Antreiben des Motors in einer Vorwärtsrichtung, wenn der Antriebsbefehl erneut über den Antriebsschalter eingegeben wird, ausgebildet.

### AUFGABE UND LÖSUNG

Der Erfindung liegt als Aufgabe die Bereitstellung eines handgeführten Garten-, Forst- und/oder Baubearbeitungsgeräts zugrunde, das verbesserte Eigenschaften aufweist. Des Weiteren liegt der Erfindung als Aufgabe die Bereitstellung eines Verfahrens für ein solches handgeführtes Garten-, Forst- und/oder Baubearbeitungsgerät zugrunde.

Die Erfindung löst diese Aufgabe durch die Bereitstellung eines handgeführten Garten-, Forst- und/oder Baubearbeitungsgeräts mit den Merkmalen des Anspruchs 1. Des Weiteren wird die der Erfindung zugrundeliegende Aufgabe durch ein Verfahren mit den Merkmalen des Anspruchs 12 gelöst. Vorteilhafte Weiterbildungen und/oder Ausgestaltungen der Erfindung sind in den abhängigen Ansprüchen beschrieben.

Das erfindungsgemäße handgeführte, insbesondere elektrische, Garten-, Forst- und/oder Baubearbeitungsgerät weist einen inaktiven Zustand, einen aktiven Zustand, eine veränderbare bzw. umschaltbare, insbesondere durchschaltbare, Einstellung und ein benutzerbetätigbares Gerätebedienelement auf. Das Garten-, Forst- und/oder Baubearbeitungsgerät in bzw. von dem inaktiven Zustand ist zum, insbesondere automatischen, Versetzen in den aktiven Zustand ausgelöst durch eine Betätigung des Gerätebedienelements, insbesondere durch einen Benutzer, ausgebildet bzw. konfiguriert. Des Weiteren ist das Garten-, Forst- und/oder Baubearbeitungsgerät in dem aktiven Zustand zum, insbesondere automatischen, Verändern bzw. Umschalten der Einstellung und nicht zum Versetzen in den inaktiven Zustand ausgelöst durch eine, insbesondere erneute bzw. wiederholte und/oder gleiche, insbesondere gleichartige, Betätigung des Gerätebedienelements, insbesondere durch den Benutzer, ausgebildet bzw. konfiguriert.

Dies, insbesondere die veränderbare Einstellung, ermöglicht eine optimale Anpassung des Garten-, Forst- und/oder Baubearbeitungsgeräts an eine Bearbeitungsaufgabe und/oder den Benutzer.

Außerdem ermöglicht dies für den Benutzer eine einfach bzw. intuitiv zu verstehende Bedienung des Garten-, Forst- und/oder Baubearbeitungsgeräts. Insbesondere kann dies ermöglichen, dass der Benutzer zum Versetzen in den aktiven Zustand und/oder zum Verändern der Einstellung das Gerätebedienelement, insbesondere einfach, betätigen kann ohne eine, insbesondere werkseitige, Vorgabe zum Betätigen, insbesondere eine Erreichung einer minimalen Zeitdauer oder eine Unterschreitung einer maximalen Zeitdauer und/oder einer Art einer Betätigung, beachten zu brauchen.

Insbesondere kann das Garten-, Forst- und/oder Baubearbeitungsgerät in dem inaktiven Zustand zum Versetzen in den aktiven Zustand ausgelöst durch eine Betätigung des Gerätebedienelements unabhängig von einer Zeitdauer und/oder einer Art der Betätigung ausgebildet sein. Zusätzlich oder alternativ kann das Garten-, Forst- und/oder Baubearbeitungsgerät in dem aktiven Zustand zum Verändern der Einstellung und nicht zum Versetzen in den inaktiven Zustand ausgelöst durch eine Betätigung des Gerätebedienelements unabhängig von einer Zeitdauer und/oder einer Art der Betätigung ausgebildet sein. Weiter zusätzlich oder alternativ kann in bzw. von dem aktiven Zustand des Garten-, Forst- und/oder Baubearbeitungsgeräts kein Versetzen in den inaktiven Zustand ausgelöst durch eine, insbesondere verschiedene, insbesondere verschiedenartige, Betätigung des Gerätebedienelements möglich sein. Weiter zusätzlich oder alternativ kann in dem inaktiven Zustand des Garten-, Forst- und/oder Baubearbeitungsgeräts kein Verändern der Einstellung ausgelöst durch eine Betätigung des Gerätebedienelements möglich sein.

Der inaktive Zustand und/oder der aktive Zustand und/oder die Einstellung können verschieden sein. Zusätzlich oder alternativ kann der inaktive Zustand als Aus-Zustand und/oder SchlafZustand bezeichnet werden. Weiter zusätzlich oder alternativ kann der aktive Zustand als An-Zustand und/oder Wach-Zustand bezeichnet werden. Weiter zusätzlich oder alternativ kann die Einstellung, insbesondere mindestens zwei, insbesondere mindestens drei, verschiedene, insbesondere durch Verändern erreichbare, Werte aufweisen. Weiter zusätzlich oder alternativ kann die Einstellung, insbesondere können die Werte, insbesondere werksseitig, vorgegeben sein.

Das Gerätebedienelement kann als Sperrhebel und/oder auf Englisch als lock-off device bezeichnet werden. Zusätzlich oder alternativ kann das Garten-, Forst- und/oder Baubearbeitungsgerät einen, insbesondere elektrischen, Geräteschalter aufweisen. Das Gerätebedienelement kann zum Betätigen des Geräteschalters ausgebildet sein. Das Garten-, Forst- und/oder Baubearbeitungsgerät in dem inaktiven Zustand kann zum Versetzen in den aktiven Zustand ausgelöst durch eine Betätigung des Geräteschalters ausgebildet sein. Des Weiteren kann das Garten-, Forst- und/oder Baubearbeitungsgerät in dem aktiven Zustand zum Verändern der Einstellung und nicht zum Versetzen in den inaktiven Zustand ausgelöst durch eine, insbesondere erneute bzw. wiederholte und/oder gleiche, insbesondere gleichartige, Betätigung des Geräteschalters ausgebildet sein.

Das handgeführte Garten-, Forst- und/oder Baubearbeitungsgerät kann ein bodengeführtes oder handgetragenes Garten-, Forst- und/oder Baubearbeitungsgerät sein. Zusätzlich oder alternativ kann handgeführtes, insbesondere handgetragenes, Garten-, Forst- und/oder Baubearbeitungsgerät bedeuten, dass das Garten-, Forst- und/oder Baubearbeitungsgerät eine maximale Masse von 50 Kilogramm (kg), insbesondere von 20 kg, insbesondere von 10 kg, aufweisen kann, insbesondere ohne einen Akkupack. Weiter zusätzlich oder alternativ kann das Garten-, Forst- und/oder Baubearbeitungsgerät ein, insbesondere wechselbares, Bearbeitungswerkzeug aufweisen.

Das Garten-, Forst- und/oder Baubearbeitungsgerät weist einen, insbesondere elektrischen, Antriebsmotor und ein benutzerbetätigbares Motorbedienelement auf. Der Antriebsmotor ist zum Antrieb des Garten-, Forst- und/oder Baubearbeitungsgeräts ausgebildet bzw. konfiguriert. Das Garten-, Forst- und/oder Baubearbeitungsgerät in dem aktiven Zustand ist zum, automatischen, Betreiben des Antriebsmotors abhängig von einer Betätigung des Motorbedienelements, insbesondere durch den Benutzer, ausgebildet bzw. konfiguriert. Das Garten-, Forst- und/oder Baubearbeitungsgerät in dem inaktiven Zustand ist nicht zum Betreiben des Antriebsmotors unabhängig von einer Betätigung des Motorbedienelements ausgebildet bzw. konfiguriert. Insbesondere kann der Antriebsmotor zum Antrieb des Bearbeitungswerkzeugs ausgebildet sein. Weiter zusätzlich oder alternativ kann das Motorbedienelement von dem Gerätebedienelement verschieden sein. Weiter zusätzlich oder alternativ kann das Motorbedienelement als Schalthebel und/oder auf Englisch als power switch bezeichnet werden. Weiter zusätzlich oder alternativ kann das Garten-, Forst- und/oder Baubearbeitungsgerät einen, insbesondere elektrischen, Motorschalter und/oder ein, insbesondere elektrisches, Motorpotentiometer aufweisen. Das Motorbedienelement kann zum Betätigen, insbesondere zum Bewegen, des Motorschalters und/oder des Motorpotentiometers ausgebildet sein. Das Garten-, Forst- und/oder Baubearbeitungsgerät in dem aktiven Zustand kann zum Betreiben des Antriebsmotors abhängig von einer Betätigung, insbesondere einer Bewegung, des Motorschalters und/oder des Motorpotentiometers ausgebildet sein. Weiter zusätzlich oder alternativ brauchen oder können das Gerätebedienelement und das Motorbedienelement, insbesondere eine Betätigung des Gerätebedienelements und eine Betätigung des Motorbedienelements, nicht, insbesondere unmittelbar oder mittelbar, mechanisch miteinander wechselwirken.

Das Garten-, Forst- und/oder Baubearbeitungsgerät ist dazu ausgebildet bzw. konfiguriert, falls das Motorbedienelement, insbesondere unbeabsichtigt, betätigt ist, bevor das Garten-, Forst- und/oder Baubearbeitungsgerät, insbesondere von dem inaktiven Zustand, in den aktiven Zustand, insbesondere unbeabsichtigt, versetzt wird bzw. ist, nicht den Antriebsmotor zu betreiben. Das Garten-, Forst- und/oder Baubearbeitungsgerät ist dazu ausgebildet bzw. konfiguriert, falls das Motorbedienelement, insbesondere beabsichtigt, betätigt wird bzw. ist, nachdem das Garten-, Forst- und/oder Baubearbeitungsgerät in den aktiven Zustand, insbesondere beabsichtigt, versetzt ist, den Antriebsmotor zu betreiben. Dies ermöglicht ein Risiko eines Schadens verursacht durch ein unbeabsichtigtes Betreiben des Antriebsmotors zu verringern oder sogar zu vermeiden.

Das Garten-, Forst- und/oder Baubearbeitungsgerät weist eine, insbesondere elektrische, Steuereinrichtung auf. Die Steuereinrichtung weist den inaktiven Zustand, den aktiven Zustand und die veränderbare Einstellung auf. Die Steuereinrichtung ist in dem aktiven Zustand zum, insbesondere automatischen, Steuern des Antriebsmotors und in dem nichtaktiven Zustand nicht zum Steuern des Antriebsmotors ausgebildet bzw. konfiguriert. Insbesondere kann die Steuereinrichtung einen Mikrocontroller und/oder den Geräteschalter und/oder den Motorschalter und/oder das Motorpotentiometer und/oder den Anwesenheitsschalter, soweit vorhanden, aufweisen. Zusätzlich oder alternativ kann die Steuereinrichtung in dem inaktiven Zustand zum Versetzen in den aktiven Zustand ausgelöst durch eine Betätigung des Gerätebedienelements ausgebildet sein. Des Weiteren kann die Steuereinrichtung in dem aktiven Zustand zum Verändern der Einstellung und nicht zum Versetzen in den inaktiven Zustand ausgelöst durch eine Betätigung des Gerätebedienelements ausgebildet sein.

In einer Ausgestaltung der Erfindung ist das Garten-, Forst- und/oder Baubearbeitungsgerät, insbesondere in dem aktiven Zustand, nicht zum Verändern der Einstellung bei Betätigung des Motorbedienelements, insbesondere unabhängig von einer Betätigung des Gerätebedienelements, ausgebildet bzw. konfiguriert. Insbesondere ist das Garten-, Forst- und/oder Baubearbeitungsgerät, insbesondere in dem aktiven Zustand, zum Verändern der Einstellung bei Nicht-Betätigung des Motorbedienelements, insbesondere ausgelöst durch eine Betätigung des Gerätebedienelements, ausgebildet bzw. konfiguriert. Dies ermöglicht ein unbeabsichtigtes Verändern der Einstellung bei Betätigung des Motorbedienelements zu vermeiden. Insbesondere kann das Garten-, Forst- und/oder Baubearbeitungsgerät, insbesondere in dem aktiven Zustand, zum Verändern der Einstellung bei einem Auslaufen des Antriebsmotors ausgebildet sein.

In einer Ausgestaltung der Erfindung weist das Garten-, Forst- und/oder Baubearbeitungsgerät einen Handgriff und ein von dem Motorbedienelement verschiedenes, insbesondere benutzerbetätigbares, Anwesenheitserkennungselement auf. Das Anwesenheitserkennungselement ist zur, insbesondere automatischen, Erkennung einer Anwesenheit einer Hand, insbesondere des Benutzers, an dem Handgriff ausgebildet bzw. konfiguriert. Das Garten-, Forst- und/oder Baubearbeitungsgerät in dem aktiven Zustand ist zum Betreiben des Antriebsmotors abhängig von einer Erkennung mittels des Anwesenheitserkennungselements ausgebildet bzw. konfiguriert. Dies ermöglicht ein Risiko eines Schadens verursacht durch ein unbeabsichtigtes Betreiben des Antriebsmotors zu verringern oder sogar zu vermeiden. Insbesondere kann der Handgriff zum Führen, insbesondere zum Tragen, des Garten-, Forst- und/oder Baubearbeitungsgeräts ausgebildet sein. Zusätzlich oder alternativ können/kann das Motorbedienelement und/oder das Anwesenheitserkennungselement an dem Handgriff angeordnet sein. Weiter zusätzlich oder alternativ kann das Anwesenheitserkennungselement von dem Gerätebedienelement verschieden sein. Weiter zusätzlich oder alternativ kann das Anwesenheitserkennungselement auf Englisch als operator presence sensor und/oder operator presence sensor circuit bezeichnet werden. Weiter zusätzlich oder alternativ kann das Garten-, Forst- und/oder Baubearbeitungsgerät einen, insbesondere elektrischen, Anwesenheitsschalter aufweisen. Das Anwesenheitserkennungselement kann zum Betätigen des Anwesenheitsschalters ausgebildet sein. Das Garten-, Forst- und/oder Baubearbeitungsgerät in dem aktiven Zustand kann zum Betreiben des Antriebsmotors abhängig von einer Betätigung des Anwesenheitsschalters ausgebildet sein. Weiter zusätzlich oder alternativ kann das Anwesenheitserkennungselement zur Betätigung durch die Hand an dem Handgriff, insbesondere durch ein Greifen des Handgriffs durch die Hand, ausgebildet sein. Das Garten-, Forst- und/oder Baubearbeitungsgerät in dem aktiven Zustand kann zum Betreiben des Antriebsmotors abhängig von einer Betätigung des Anwesenheitserkennungselements ausgebildet sein. Weiter zusätzlich oder alternativ brauchen oder können das Gerätebedienelement und das Anwesenheitserkennungselement, insbesondere eine Betätigung des Gerätebedienelements und eine Erkennung mittels, insbesondere eine Betätigung, des Anwesenheitserkennungselements, nicht, insbesondere unmittelbar oder mittelbar, mechanisch miteinander wechselwirken.

In einer Ausgestaltung der Erfindung ist das Motorbedienelement als ein benutzerbewegliches Motorbedienelement ausgebildet bzw. konfiguriert. Das Garten-, Forst- und/oder Baubearbeitungsgerät, insbesondere das Anwesenheitserkennungselement, ist zum, insbesondere automatischen und/oder mechanischen, Sperren einer Bewegung des Motorbedienelements, insbesondere falls das Motorbedienelement nicht bewegt ist, bei Nicht-Erkennung mittels des Anwesenheitserkennungselements ausgebildet bzw. konfiguriert. Dies ermöglicht für den Benutzer eine einfach bzw. intuitiv verstehende Bedienung des Garten-, Forst- und/oder Baubearbeitungsgeräts. Insbesondere kann das Motorbedienelement als ein Druck-Bedienelement ausgebildet sein. Zusätzlich oder alternativ kann das Garten-, Forst- und/oder Baubearbeitungsgerät in dem aktiven Zustand zum Betreiben des Antriebsmotors abhängig von einer Bewegung des Motorbedienelements ausgebildet sein. Weiter zusätzlich oder alternativ kann das Anwesenheitserkennungselement als Schalthebelsperre bezeichnet werden. Weiter zusätzlich oder alternativ kann das Garten-, Forst- und/oder Baubearbeitungsgerät, insbesondere das Anwesenheitserkennungselement, zum, insbesondere automatischen und/oder mechanischen, Freigeben einer Bewegung des Motorbedienelements bei Erkennung mittels des Anwesenheitserkennungselements ausgebildet sein.

In einer Weiterbildung, insbesondere einer Ausgestaltung, der Erfindung sind das Gerätebedienelement und das Motorbedienelement zur gleichzeitigen Betätigung durch eine, insbesondere die, Hand, insbesondere des Benutzers, und insbesondere das Anwesenheitserkennungselement, soweit vorhanden, zur gleichzeitigen Erkennung der Anwesenheit der Hand, angeordnet. Dies ermöglicht eine Einhandbedienung des Garten-, Forst- und/oder Baubearbeitungsgeräts, insbesondere des Gerätebedienelements und des Motorbedienelements, und insbesondere des Anwesenheitserkennungselements. Insbesondere können/kann das Gerätebedienelement und/oder das Motorbedienelement und/oder das Anwesenheitserkennungselement an dem Handgriff angeordnet sein.

In einer Weiterbildung, insbesondere einer Ausgestaltung, der Erfindung ist das Gerätebedienelement als ein benutzerbewegliches Gerätebedienelement ausgebildet bzw. konfiguriert. Das Garten-, Forst- und/oder Baubearbeitungsgerät weist ein Geräterückstellelement auf. Das Geräterückstellelement ist zur Kraftbeaufschlagung des Gerätebedienelements zur Rückstellung einer Bewegung des Gerätebedienelements, insbesondere von einer, insbesondere einzigen, Betätigungsstellung in eine Nicht-Betätigungsstellung, ausgebildet bzw. konfiguriert. Zusätzlich oder alternativ ist das Motorbedienelement als ein, insbesondere das, benutzerbewegliches Motorbedienelement ausgebildet bzw. konfiguriert. Das Garten-, Forst- und/oder Baubearbeitungsgerät weist ein Motorrückstellelement auf. Das Motorrückstellelement ist zur Kraftbeaufschlagung des Motorbedienelements zur Rückstellung einer Bewegung des Motorbedienelements, insbesondere von mindestens einer Betätigungsstellung in eine Nicht-Betätigungsstellung, ausgebildet bzw. konfiguriert. Zusätzlich oder alternativ ist das Anwesenheitserkennungselement, soweit vorhanden, als ein benutzerbewegliches Anwesenheitserkennungselement ausgebildet bzw. konfiguriert. Das Garten-, Forst- und/oder Baubearbeitungsgerät weist ein Erkennungsrückstellelement auf. Das Erkennungsrückstellelement ist zur Kraftbeaufschlagung des Anwesenheitserkennungselements zur Rückstellung einer Bewegung des Anwesenheitserkennungselements, insbesondere von einer, insbesondere einzigen, Betätigungsstellung, insbesondere eine Freigabestellung, in eine Nicht-Betätigungsstellung, insbesondere eine Sperrstellung, ausgebildet bzw. konfiguriert. Dies ermöglicht die erneute bzw. wiederholte und/oder gleiche, insbesondere gleichartige, Betätigung bzw. Bewegung des Gerätebedienelements. Zusätzlich oder alternativ ermöglicht dies, dass das Garten-, Forst- und/oder Baubearbeitungsgerät nicht zum Einrasten und/oder zum mechanischen Halten des Gerätebedienelements in der Betätigungsstellung, insbesondere einer Aktivierungsstellung, ausgebildet sein braucht oder kann. Somit ermöglicht dies einen einfachen Aufbau des Garten-, Forst- und/oder Baubearbeitungsgeräts. Weiter zusätzlich oder alternativ ermöglicht dies, dass das Garten-, Forst- und/oder Baubearbeitungsgeräts bei einem Loslassen des bewegten Motorbedienelements und/oder des bewegten Anwesenheitserkennungselements ein Betreiben des Antriebsmotors selbstständig bzw. eigenständig bzw. automatisch beenden kann. Somit ermöglicht dies ein Risiko eines Schadens verursacht durch ein Betreiben des Antriebsmotors zu verringern oder sogar zu vermeiden und/oder für den Benutzer eine hohe Sicherheit. Insbesondere können/kann das Gerätebedienelement und/oder das Motorbedienelement und/oder das Anwesenheitserkennungselement, insbesondere jeweils, als ein Druck-Bedienelement ausgebildet sein. Zusätzlich oder alternativ kann das Garten-, Forst- und/oder Baubearbeitungsgerät in dem inaktiven Zustand zum Versetzen in den aktiven Zustand und/oder in dem aktiven Zustand zum Verändern der Einstellung ausgelöst durch eine Bewegung des Gerätebedienelements ausgebildet sein. Zusätzlich oder alternativ kann das Garten-, Forst- und/oder Baubearbeitungsgerät in dem aktiven Zustand zum Betreiben des Antriebsmotors abhängig von einer Bewegung des Motorbedienelements ausgebildet sein. Weiter zusätzlich oder alternativ kann das Garten-, Forst- und/oder Baubearbeitungsgerät in dem aktiven Zustand zum Betreiben des Antriebsmotors abhängig von einer Bewegung des Anwesenheitserkennungselements ausgebildet sein. Weiter zusätzlich oder alternativ können/kann das Geräterückstellelement und/oder das Motorrückstellelement und/oder das Erkennungsrückstellelement, insbesondere jeweils, eine Feder aufweisen, insbesondere sein. Weiter zusätzlich oder alternativ können/kann der Geräteschalter und/oder der Motorschalter und/oder das Motorpotentiometer und/oder der Anwesenheitsschalter, soweit vorhanden, insbesondere jeweils, selbstrückstellend ausgebildet sein.

In einer Weiterbildung, insbesondere einer Ausgestaltung, der Erfindung ist das Garten-, Forst- und/oder Baubearbeitungsgerät in bzw. von dem aktiven Zustand zum selbstständigen bzw. eigenständigen bzw. automatischen Versetzen in den inaktiven Zustand ausgebildet bzw. konfiguriert, insbesondere ohne den Benutzer. Insbesondere ausgelöst durch Ablauf bzw. Erreichung einer, insbesondere werksseitig, vorgegebenen Zeitdauer seit einem, insbesondere letzten, Versetzen, insbesondere einem Anfang des Versetzens, in den aktiven Zustand bei Nicht-Betätigung des Gerätebedienelements und/oder Nicht-Betätigung des Motorbedienelements und/oder Nicht-Erkennung mittels des Anwesenheitserkennungselements, soweit vorhanden. Zusätzlich oder alternativ insbesondere ausgelöst durch Ablauf bzw. Erreichung einer, insbesondere werksseitig, vorgegebenen Zeitdauer seit einem Ende einer, insbesondere letzten, Betätigung des Gerätebedienelements und/oder einer, insbesondere letzten, Betätigung des Motorbedienelements und/oder einer, insbesondere letzten, Erkennung mittels des Anwesenheitserkennungselements, soweit vorhanden, in dem aktiven Zustand. Zusätzlich oder alternativ insbesondere ausgelöst durch Nicht-Betätigung des Motorbedienelements, insbesondere direkt, nach, insbesondere einem Ende, einer, insbesondere letzten, Betätigung des Motorbedienelements und/oder Nicht-Erkennung mittels des Anwesenheitserkennungselements, insbesondere direkt, nach, insbesondere einem Ende, einer, insbesondere letzten, Erkennung mittels des Anwesenheitserkennungselements in dem aktiven Zustand. Dies ermöglicht, dass das Garten-, Forst- und/oder Baubearbeitungsgerät in dem aktiven Zustand nicht zum Versetzen in den inaktiven Zustand ausgelöst durch eine Betätigung des Gerätebedienelements ausgebildet zu sein braucht. Insbesondere kann die Zeitdauer größer Null sein, insbesondere minimal 0,5 Sekunden (s) und/oder maximal 10 s.

In einer Weiterbildung der Erfindung weist das Garten-, Forst- und/oder Baubearbeitungsgerät den, insbesondere elektrischen, Antriebsmotor auf. Der Antriebsmotor ist zum Antrieb des Garten-, Forst- und/oder Baubearbeitungsgeräts ausgebildet bzw. konfiguriert. Die Einstellung ist eine Betriebseinstellung zum Betreiben des Antriebsmotors. Dies ermöglicht eine optimale Anpassung des Antriebsmotors an eine Bearbeitungsaufgabe und/oder den Benutzer. Insbesondere kann der Antriebsmotor zum Antrieb des Bearbeitungswerkzeugs ausgebildet sein.

In einer Ausgestaltung der Erfindung weist die Betriebseinstellung, insbesondere mindestens zwei, insbesondere mindestens drei, verschiedene maximale Drehzahlen, insbesondere mindestens zwei, insbesondere mindestens drei, verschiedene Drehzahlbereiche, insbesondere mindestens zwei, insbesondere mindestens drei, verschiedene Motorbedienelementbetätigungs-Drehzahl-Kennlinien, insbesondere mindestens zwei, insbesondere mindestens drei, verschiedene maximale Leistungen und/oder, insbesondere mindestens zwei, insbesondere mindestens drei, verschiedene Betriebsmodi des Antriebsmotors auf. Insbesondere kann das Garten-, Forst- und/oder Baubearbeitungsgerät das, insbesondere bewegliche, Motorbedienelement aufweisen. Die Motorbedienelementbetätigungs-Drehzahl-Kennlinien können, insbesondere jeweils, durch eine Zuordnung einer jeweiligen Drehzahl zu einer jeweiligen Betätigung, insbesondere einer jeweiligen Bewegung, insbesondere einer jeweiligen Stellung, des Motorbedienelements, insbesondere des Motorpotentiometers, soweit vorhanden, definiert sein.

In einer Weiterbildung der Erfindung ist das Garten-, Forst- und/oder Baubearbeitungsgerät eine Säge, ein, insbesondere kurzer, Hoch-Entaster, insbesondere mit einem drehbaren Getriebe, bzw. ein Spacer, ein Freischneider, eine Heckenschere, ein Heckenschneider, ein Blasgerät, ein Laubbläser, eine Astschere, ein Trennschleifer, ein Kehrgerät, eine Kehrwalze, eine Kehrbürste, ein Rasenmäher, ein Vertikutierer, eine Grasschere, eine Kreiselschere oder ein Olivenernter.

In einer Weiterbildung, insbesondere einer Ausgestaltung, der Erfindung weist das Garten-, Forst- und/oder Baubearbeitungsgerät eine, insbesondere elektrische, Ausgabeeinrichtung auf. Die Ausgabeeinrichtung, insbesondere in dem aktiven Zustand des Garten-, Forst- und/oder Baubearbeitungsgeräts, ist zum, insbesondere automatischen, Ausgeben einer, insbesondere benutzerwahrnehmbaren, Information über den aktiven Zustand, die Einstellung, eine Betätigung des Motorbedienelements, insbesondere vor einem Versetzen des Garten-, Forst- und/oder Baubearbeitungsgeräts in den aktiven Zustand, und/oder eine Erkennung mittels des Anwesenheitserkennungselements, soweit vorhanden, ausgebildet bzw. konfiguriert. Dies ermöglicht für den Benutzer ein Feedback, insbesondere über eine nicht bestimmungsgemäße Bedienung bzw. eine Fehl-Bedienung des Garten-, Forst- und/oder Baubearbeitungsgeräts durch den Benutzer. Insbesondere kann die Ausgabeeinrichtung eine Anzeige aufweisen, insbesondere sein. Zusätzlich oder alternativ braucht oder kann die Ausgabeeinrichtung in dem inaktiven Zustand des Garten-, Forst- und/oder Baubearbeitungsgeräts nicht zum Ausgeben der Information ausgebildet sein.

Das erfindungsgemäße Verfahren für ein, insbesondere das, handgeführtes Garten-, Forst- und/oder Baubearbeitungsgerät wie zuvor beschrieben weist die Schritte auf: a) In bzw. von dem inaktiven Zustand des Garten-, Forst- und/oder Baubearbeitungsgeräts, insbesondere automatisches, Versetzen in den aktiven Zustand ausgelöst durch eine Betätigung des Gerätebedienelements, insbesondere durch den Benutzer, b) In dem aktiven Zustand des Garten-, Forst- und/oder Baubearbeitungsgeräts, insbesondere automatisches, Verändern bzw. Umschalten der Einstellung und nicht Versetzen in den inaktiven Zustand ausgelöst durch eine, insbesondere erneute bzw. wiederholte und/oder gleiche, insbesondere gleichartige, Betätigung des Gerätebedienelements, insbesondere durch den Benutzer. Insbesondere kann der Schritt b) nach dem Schritt a) ausgeführt werden. Zusätzlich oder alternativ kann der Schritt b, insbesondere mehrfach, wiederholt ausgeführt werden. Weiter zusätzlich oder alternativ braucht das Verfahren keinen Schritt aufweisen: In bzw. von dem aktiven Zustand des Garten-, Forst- und/oder Baubearbeitungsgeräts Versetzen in den inaktiven Zustand ausgelöst durch eine insbesondere verschiedene, insbesondere verschiedenartige, Betätigung des Gerätebedienelements. Weiter zusätzlich oder alternativ braucht das Verfahren keinen Schritt aufweisen: In dem inaktiven Zustand des Garten-, Forst- und/oder Baubearbeitungsgeräts Verändern der Einstellung ausgelöst durch eine Betätigung des Gerätebedienelements.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1: eine Perspektivansicht eines erfindungsgemäßen handgeführten Garten-, Forst- und/oder Baubearbeitungsgeräts,
- Fig. 2a: eine Perspektivansicht eines Ausschnitts der Garten-, Forst- und/oder Baubearbeitungsgeräts der Fig. 1 in einem inaktiven Zustand und eines erfindungsgemäßen Verfahrens für das Garten-, Forst- und/oder Baubearbeitungsgeräts der Fig. 1,
- Fig. 2b: eine weitere Perspektivansicht des Ausschnitts der Garten-, Forst- und/oder Baubearbeitungsgeräts der Fig. 1 in einen aktiven Zustand versetzt ausgelöst durch eine Betätigung eines Gerätebedienelements des Garten-, Forst- und/oder Baubearbeitungsgeräts der Fig. 1 und des Verfahrens,
- Fig. 2c: eine weitere Perspektivansicht des Ausschnitts der Garten-, Forst- und/oder Baubearbeitungsgeräts der Fig. 1 in dem aktiven Zustand bei Betätigung eines Anwesenheitserkennungselements des Garten-, Forst- und/oder Baubearbeitungsgeräts der Fig. 1 und des Verfahrens,
- Fig. 2d: eine weitere Perspektivansicht des Ausschnitts der Garten-, Forst- und/oder Baubearbeitungsgeräts der Fig. 1 in dem aktiven Zustand nach der Betätigung des Anwesenheitserkennungselements und des Verfahrens,
- Fig. 3a: eine weitere Perspektivansicht des Ausschnitts der Garten-, Forst- und/oder Baubearbeitungsgeräts der Fig. 1 in dem aktiven Zustand beim Betreiben eines Antriebsmotors des Garten-, Forst- und/oder Baubearbeitungsgeräts der Fig. 1 bei einer Betätigung eines Motorbedienelements des Garten-, Forst- und/oder Baubearbeitungsgeräts der Fig. 1 und des Verfahrens,
- Fig. 3b: eine weitere Perspektivansicht des Ausschnitts der Garten-, Forst- und/oder Baubearbeitungsgeräts der Fig. 1 in dem aktiven Zustand beim Verändern einer Einstellung des Garten-, Forst- und/oder Baubearbeitungsgeräts der Fig. 1 ausgelöst durch eine Betätigung des Gerätebedienelements und des Verfahrens, und
- Fig. 4: eine Schnittansicht des Ausschnitts der Garten-, Forst- und/oder Baubearbeitungsgeräts der Fig. 1.

### DETAILLIERTE BESCHREIBUNG DER AUSFÜHRUNGSBEISPIELE

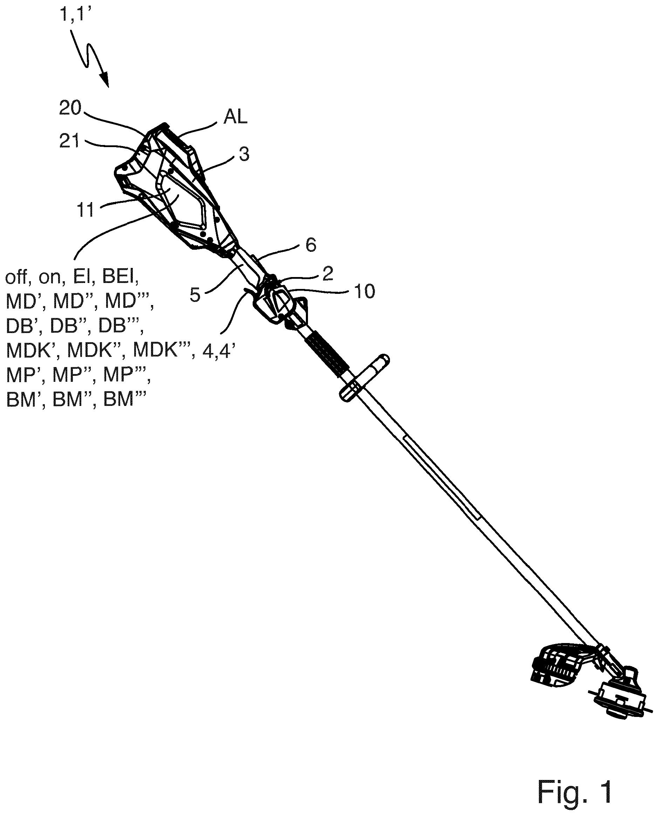

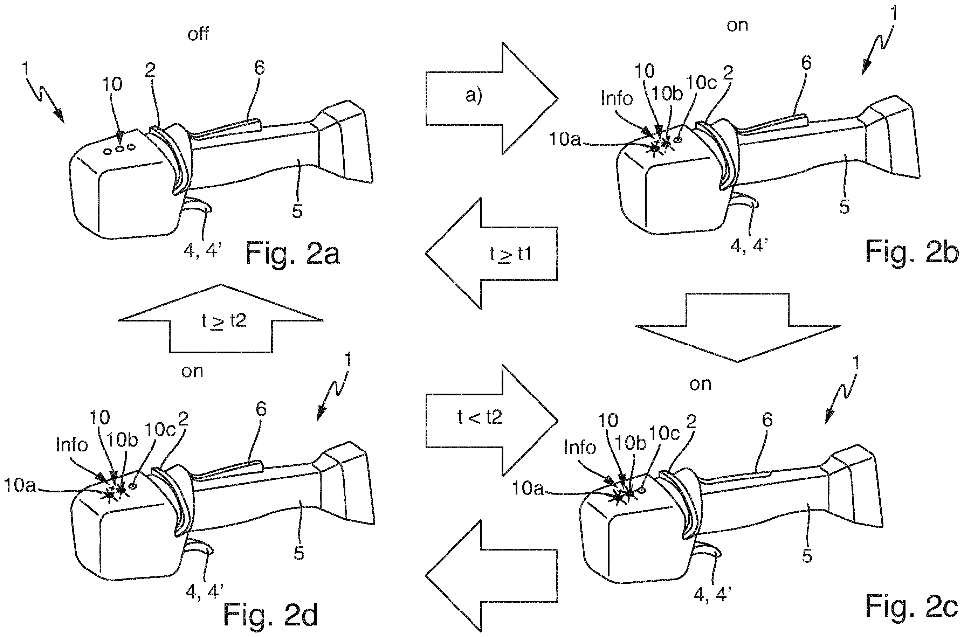

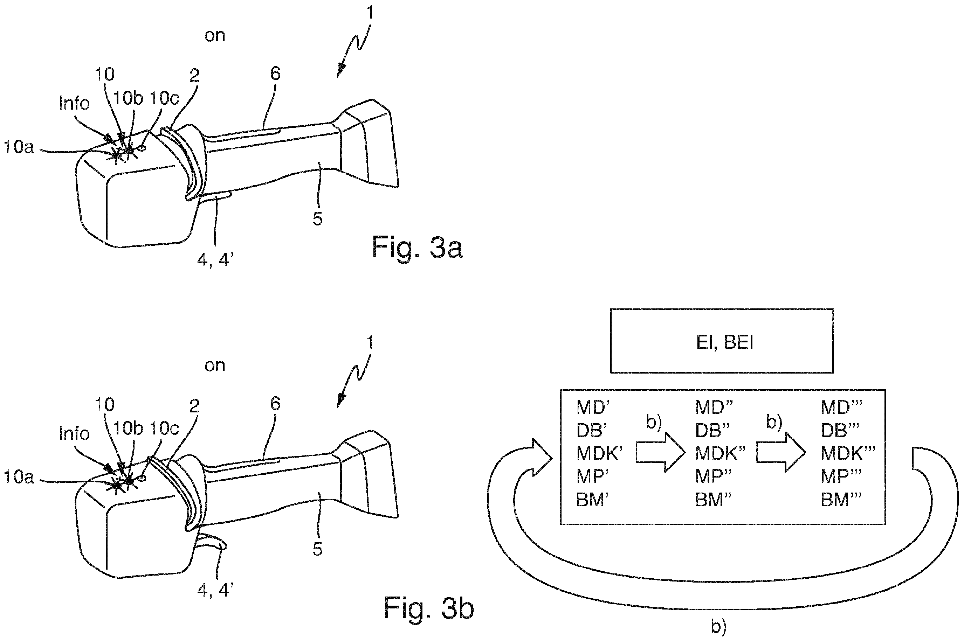

Fig. 1 bis 4 zeigen ein erfindungsgemäßes handgeführtes Garten-, Forst- und/oder Baubearbeitungsgerät 1. Das Garten-, Forst- und/oder Baubearbeitungsgerät 1 weist einen inaktiven Zustand off, einen aktiven Zustand on, eine veränderbare Einstellung EI und ein benutzerbetätigbares Gerätebedienelement 2 auf. Das Garten-, Forst- und/oder Baubearbeitungsgerät 1 in dem inaktiven Zustand off ist zum Versetzen in den aktiven Zustand on ausgelöst durch eine Betätigung des Gerätebedienelements 2 ausgebildet, wie durch einen Pfeil von Fig. 2a zu Fig. 2b gezeigt. Des Weiteren ist das Garten-, Forst- und/oder Baubearbeitungsgerät 1 in dem aktiven Zustand on zum Verändern der Einstellung El und nicht zum Versetzen in den inaktiven Zustand off ausgelöst durch eine Betätigung des Gerätebedienelements 2 ausgebildet, wie durch Pfeile in Fig. 3b gezeigt.

Im Detail weist das Garten-, Forst- und/oder Baubearbeitungsgerät eine, insbesondere elektrische, Steuereinrichtung 11 auf. Die Steuereinrichtung 11 weist den inaktiven Zustand off, den aktiven Zustand on und die veränderbare Einstellung El auf.

Das erfindungsgemäße Verfahren für das handgeführte Garten-, Forst- und/oder Baubearbeitungsgerät 1 weist die Schritte auf: a) In dem inaktiven Zustand off des Garten-, Forst- und/oder Baubearbeitungsgeräts 1, insbesondere der Steuereinrichtung 11, Versetzen in den aktiven Zustand on ausgelöst durch eine Betätigung des Gerätebedienelements 2. b) In dem aktiven Zustand on des Garten-, Forst- und/oder Baubearbeitungsgeräts, insbesondere der Steuereinrichtung 11, Verändern der Einstellung El und nicht Versetzen in den inaktiven Zustand off ausgelöst durch eine Betätigung des Gerätebedienelements 2.

Im Detail weist das Garten-, Forst- und/oder Baubearbeitungsgerät 1 einen, insbesondere elektrischen, Antriebsmotor 3 auf. Der Antriebsmotor 3 ist zum Antrieb des Garten-, Forst- und/oder Baubearbeitungsgeräts 1 ausgebildet.

Insbesondere ist die Steuereinrichtung 11 in dem aktiven Zustand on zum Steuern des Antriebsmotors 3 und in dem nichtaktiven Zustand off nicht zum Steuern des Antriebsmotors 3 ausgebildet.

Im gezeigten Ausführungsbeispiel ist das Garten-, Forst- und/oder Baubearbeitungsgerät 1 zur elektrischen Verbindung mit einem Akkupack 20 zur Versorgung des Garten-, Forst- und/oder Baubearbeitungsgeräts 1, insbesondere der Steuereinrichtung 11 und/oder des Antriebsmotors 3, mit elektrischer Antriebsleistung AL von dem Akkupack 20 ausgebildet.

Insbesondere weist das Garten-, Forst- und/oder Baubearbeitungsgerät 1 eine Akkuaufnahme 21 auf. Die Akkuaufnahme 21 ist zum Aufnehmen des Akkupacks 20 ausgebildet.

In Fig. 1 sind das Garten-, Forst- und/oder Baubearbeitungsgerät 1 und der Akkupack 20 miteinander elektrisch verbunden. Insbesondere hat die Akkuaufnahme 21 den Akkupack 20 aufgenommen.

Falls das Garten-, Forst- und/oder Baubearbeitungsgerät 1 und der Akkupack 20 nicht miteinander elektrisch verbunden sind, weist das Garten-, Forst- und/oder Baubearbeitungsgerät 1, insbesondere die Steuereinrichtung 11, den inaktiven Zustand off auf, und insbesondere braucht oder kann nicht den aktiven Zustand on aufweisen.

Des Weiteren ist das Garten-, Forst- und/oder Baubearbeitungsgerät 1, insbesondere die Steuereinrichtung 11, in dem aktiven Zustand on zum Speichern und Verwenden der letzten Einstellung EI ausgebildet, insbesondere dazu, dass die letzte Einstellung EI nicht durch den inaktiven Zustand off, insbesondere durch nicht elektrische Verbindung mit dem Akkupack 20, verloren gehen kann.

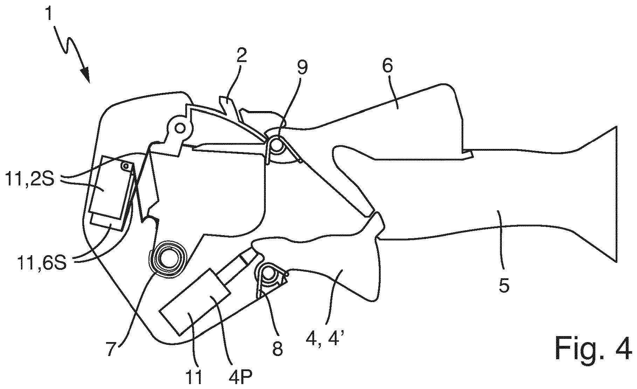

Außerdem weist das Garten-, Forst- und/oder Baubearbeitungsgerät 1, insbesondere die Steuereinrichtung 11, einen, insbesondere elektrischen, Geräteschalter 2S auf, wie in Fig. 4 gezeigt. Das Gerätebedienelement 2 ist zum Betätigen des Geräteschalters 2S ausgebildet. Das Garten-, Forst- und/oder Baubearbeitungsgerät 1, insbesondere die Steuereinrichtung 11, in dem inaktiven Zustand off ist zum Versetzen in den aktiven Zustand on ausgelöst durch eine Betätigung des Geräteschalters 2S ausgebildet. Des Weiteren ist das Garten-, Forst- und/oder Baubearbeitungsgerät 1, insbesondere die Steuereinrichtung 11, in dem aktiven Zustand on zum Verändern der Einstellung El und nicht zum Versetzen in den inaktiven Zustand off ausgelöst durch eine Betätigung des Geräteschalters 2S ausgebildet.

Weiter weist das Garten-, Forst- und/oder Baubearbeitungsgerät ein benutzerbetätigbares Motorbedienelement 4 auf. Das Garten-, Forst- und/oder Baubearbeitungsgerät 1, insbesondere die Steuereinrichtung 11, in dem aktiven Zustand on ist zum Betreiben des Antriebsmotors 3 abhängig von einer Betätigung des Motorbedienelements 4 ausgebildet.

Insbesondere ist das Garten-, Forst- und/oder Baubearbeitungsgerät 1, insbesondere die Steuereinrichtung 11, in dem inaktiven Zustand off nicht zum Betreiben des Antriebsmotors 3 unabhängig von einer Betätigung des Motorbedienelements 4 ausgebildet.

Im gezeigten Ausführungsbeispiel weist das Garten-, Forst- und/oder Baubearbeitungsgerät 1, insbesondere die Steuereinrichtung 11, ein, insbesondere elektrisches, Motorpotentiometer 4P auf, wie in Fig. 4 gezeigt. Das Motorbedienelement 4 ist zum Betätigen, insbesondere zum Bewegen, des Motorpotentiometers 4P ausgebildet. Das Garten-, Forst- und/oder Baubearbeitungsgerät 1, insbesondere die Steuereinrichtung 11, in dem aktiven Zustand on ist zum Betreiben des Antriebsmotors 3 abhängig von einer Betätigung, insbesondere einer Bewegung, des Motorpotentiometers 4P ausgebildet.

Im Detail ist das Garten-, Forst- und/oder Baubearbeitungsgerät 1, insbesondere die Steuereinrichtung 11, nicht zum Verändern der Einstellung EI bei Betätigung des Motorbedienelements 4 ausgebildet.

Insbesondere ist das Garten-, Forst- und/oder Baubearbeitungsgerät 1, insbesondere die Steuereinrichtung 11, zum Verändern der Einstellung EI bei Nicht-Betätigung des Motorbedienelements 4 ausgebildet.

Zudem ist das Garten-, Forst- und/oder Baubearbeitungsgerät 1, insbesondere die Steuereinrichtung 11, dazu ausgebildet, falls das Motorbedienelement 4 betätigt ist, bevor das Garten-, Forst- und/oder Baubearbeitungsgerät 1, insbesondere die Steuereinrichtung 11, in den aktiven Zustand on versetzt wird, nicht den Antriebsmotor 3 zu betreiben.

Insbesondere ist das Garten-, Forst- und/oder Baubearbeitungsgerät 1, insbesondere die Steuereinrichtung 11, dazu ausgebildet, falls das Motorbedienelement 4 betätigt wird, nachdem das Garten-, Forst- und/oder Baubearbeitungsgerät 1, insbesondere die Steuereinrichtung 11, in den aktiven Zustand on versetzt ist, den Antriebsmotor 3 zu betreiben.

Des Weiteren weist das Garten-, Forst- und/oder Baubearbeitungsgerät 1 einen Handgriff 5 und ein von dem Motorbedienelement 4 verschiedenes, insbesondere benutzerbetätigbares, Anwesenheitserkennungselement 6 auf. Das Anwesenheitserkennungselement 6 ist zur Erkennung einer Anwesenheit einer Hand, insbesondere zur Betätigung durch eine Hand, an dem Handgriff 5 ausgebildet. Das Garten-, Forst- und/oder Baubearbeitungsgerät 1, insbesondere die Steuereinrichtung 11, in dem aktiven Zustand on ist zum Betreiben des Antriebsmotors 3 abhängig von einer Erkennung mittels des Anwesenheitserkennungselements 6, insbesondere einer Betätigung des Anwesenheitserkennungselements 6, ausgebildet.

Im gezeigten Ausführungsbeispiel weist das Garten-, Forst- und/oder Baubearbeitungsgerät 1, insbesondere die Steuereinrichtung 11, einen, insbesondere elektrischen, Anwesenheitsschalter 6S auf, wie in Fig. 4 gezeigt. Das Anwesenheitserkennungselement 6 ist zum Betätigen des Anwesenheitsschalters 6S ausgebildet. Das Garten-, Forst- und/oder Baubearbeitungsgerät 1, insbesondere die Steuereinrichtung 11, in dem aktiven Zustand on ist zum Betreiben des Antriebsmotors 3 abhängig von einer Betätigung des Anwesenheitsschalters 6S ausgebildet.

Im Detail ist das Motorbedienelement 4 als ein benutzerbewegliches Motorbedienelement 4' ausgebildet.

Außerdem ist das Garten-, Forst- und/oder Baubearbeitungsgerät 1, insbesondere das Anwesenheitserkennungselement 6, zum, insbesondere mechanischen, Sperren einer Bewegung des Motorbedienelements 4' bei Nicht-Erkennung mittels des Anwesenheitserkennungselements 6, insbesondere bei Nicht-Betätigung des Anwesenheitserkennungselements 6, ausgebildet, wie in Fig. 4 gezeigt.

Insbesondere ist das Garten-, Forst- und/oder Baubearbeitungsgerät 1, insbesondere das Anwesenheitserkennungselement 6, zum, insbesondere mechanischen, Freigeben einer Bewegung des Motorbedienelements 4' bei Erkennung mittels des Anwesenheitserkennungselements 6, insbesondere bei Betätigung des Anwesenheitserkennungselements 6, ausgebildet, wie durch einen Pfeil von Fig. 2b zu Fig. 2c und durch einen Pfeil von Fig. 2d zu Fig. 2c gezeigt.

Somit wechselwirken im gezeigten Ausführungsbeispiel das Motorbedienelement 4, 4' und das Anwesenheitserkennungselement 6, insbesondere eine Betätigung, insbesondere eine Bewegung, des Motorbedienelements 4, 4' und eine Erkennung mittels, insbesondere einer Betätigung, des Anwesenheitserkennungselements 6, insbesondere unmittelbar, mechanisch miteinander. Zusätzlich wechselwirken im gezeigten Ausführungsbeispiel das Gerätebedienelement 2, das Motorbedienelement 4, 4' und das Anwesenheitserkennungselement 6, insbesondere eine Betätigung des Gerätebedienelements 2, eine Betätigung, insbesondere eine Bewegung, des Motorbedienelements 4, 4' und eine Erkennung mittels, insbesondere eine Betätigung, des Anwesenheitserkennungselements 6, elektrisch, insbesondere mittels der Steuereinrichtung 11, miteinander. In alternativen Ausführungsbeispielen können das Motorbedienelement und das Anwesenheitserkennungselement, insbesondere eine Betätigung, insbesondere eine Bewegung, des Motorbedienelements und eine Erkennung mittels, insbesondere einer Betätigung, des Anwesenheitserkennungselements, insbesondere mittels der Steuereinrichtung 11, nur elektrisch miteinander wechselwirken bzw. brauchen oder können nicht mechanisch miteinander wechselwirken.

Weiter sind das Gerätebedienelement 2 und das Motorbedienelement 4 zur gleichzeitigen Betätigung durch die Hand, und insbesondere das Anwesenheitserkennungselement 6, zur gleichzeitigen Erkennung der Anwesenheit der Hand, angeordnet.

Im gezeigten Ausführungsbeispiel sind das Gerätebedienelement 2, das Motorbedienelement 4 und das Anwesenheitserkennungselement 6 an dem Handgriff 5 angeordnet.

Zudem ist das Gerätebedienelement 2 als ein benutzerbewegliches Gerätebedienelement 2' ausgebildet. Das Garten-, Forst- und/oder Baubearbeitungsgerät 1 weist ein Geräterückstellelement 7 auf, im gezeigten Ausführungsbeispiel in Form einer Schraubenfeder, wie in Fig. 4 gezeigt. Das Geräterückstellelement 7 ist zur Kraftbeaufschlagung des Gerätebedienelements 2' zur Rückstellung einer Bewegung des Gerätebedienelements 2`, insbesondere von einer Betätigungsstellung, wie in Fig. 3b gezeigt, in eine Nicht-Betätigungsstellung, wie in Fig. 1 bis 3a und 4 gezeigt, ausgebildet.

Zusätzlich ist das Motorbedienelement 4 als das benutzerbewegliche Motorbedienelement 4' ausgebildet. Das Garten-, Forst- und/oder Baubearbeitungsgerät 1 weist ein Motorrückstellelement 8 auf, im gezeigten Ausführungsbeispiel in Form einer Schraubenfeder, wie in Fig. 4 gezeigt. Das Motorrückstellelement 8 ist zur Kraftbeaufschlagung des Motorbedienelements 4' zur Rückstellung einer Bewegung des Motorbedienelements 4', insbesondere von mindestens einer Betätigungsstellung, wie in Fig. 3a gezeigt, in eine Nicht-Betätigungsstellung, wie in Fig. 1, 2, 3b und 4 gezeigt, ausgebildet.

Zusätzlich ist das Anwesenheitserkennungselement 6 als ein benutzerbewegliches Anwesenheitserkennungselement 6' ausgebildet. Das Garten-, Forst- und/oder Baubearbeitungsgerät 1 weist ein Erkennungsrückstellelement 9 auf, im gezeigten Ausführungsbeispiel in Form einer Schraubenfeder, wie in Fig. 4 gezeigt. Das Erkennungsrückstellelement 9 ist zur Kraftbeaufschlagung des Anwesenheitserkennungselements 6' zur Rückstellung einer Bewegung des Anwesenheitserkennungselements 6`, insbesondere von einer Betätigungsstellung, wie in Fig. 2c und 3 gezeigt, in eine Nicht-Betätigungsstellung, wie in Fig. 1, 2a, 2b, 2c und 4 gezeigt, ausgebildet.

Insbesondere sind der Geräteschalter 2S, das Motorpotentiometer 4P und der Anwesenheitsschalter 6S, insbesondere jeweils, selbstrückstellend ausgebildet.

Des Weiteren ist das Garten-, Forst- und/oder Baubearbeitungsgerät 1, insbesondere die Steuereinrichtung 11, in dem aktiven Zustand on zum selbstständigen Versetzen in den inaktiven Zustand off ausgebildet.

Insbesondere ausgelöst durch Ablauf einer vorgegebenen Zeitdauer t1, im gezeigten Ausführungsbeispiel von 5 s, seit einem Versetzen in den aktiven Zustand on bei Nicht-Betätigung des Gerätebedienelements 2 und/oder Nicht-Erkennung mittels des Anwesenheitserkennungselements 6, wie durch einen Pfeil von Fig. 2b zu Fig. 2a gezeigt. In alternativen Ausführungsbeispielen ausgelöst durch Ablauf der vorgegebenen Zeitdauer seit einem Versetzen in den aktiven Zustand bei Nicht-Betätigung des Motorbedienelements, insbesondere falls das Anwesenheitserkennungselement nicht vorhanden ist.

Zusätzlich oder alternativ insbesondere ausgelöst durch Ablauf einer vorgegebenen Zeitdauer t2, im gezeigten Ausführungsbeispiel von 1 s, seit einem Ende einer Betätigung des Gerätebedienelements 2 und/oder einer Erkennung mittels des Anwesenheitserkennungselements 6 in dem aktiven Zustand on, wie durch einen Pfeil von Fig. 2d zu Fig. 2a und durch den Pfeil von Fig. 2d zu Fig. 2c gezeigt. In alternativen Ausführungsbeispielen ausgelöst durch Ablauf der vorgegebenen Zeitdauer seit einem Ende einer Betätigung des Motorbedienelements in dem aktiven Zustand, insbesondere falls das Anwesenheitserkennungselement nicht vorhanden ist. In alternativen Ausführungsbeispielen ausgelöst durch Nicht-Betätigung des Motorbedienelements nach einer Betätigung des Motorbedienelements und/oder Nicht-Erkennung mittels des Anwesenheitserkennungselements nach einer Erkennung mittels des Anwesenheitserkennungselements in dem aktiven Zustand, insbesondere falls die vorgegebene Zeitdauer nicht vorhanden ist.

Außerdem ist die Einstellung El eine Betriebseinstellung BEI zum Betreiben des Antriebsmotors 3.

Im Detail weist die Betriebseinstellung BEI, insbesondere drei, verschiedene maximale Drehzahlen MD`, MD", MD‴, insbesondere drei, verschiedene Drehzahlbereiche DB`, DB", DB‴, insbesondere drei, verschiedene Motorbedienelementbetätigungs-Drehzahl-Kennlinien MDK`, MDK", MDK‴, insbesondere drei, verschiedene maximale Leistungen MP`, MP", MP‴ und, insbesondere drei, verschiedene Betriebsmodi BM`, BM", BM‴ des Antriebsmotors 3 auf.

Im gezeigten Ausführungsbeispiel weist die Betriebseinstellung BEI die verschiedenen Betriebsmodi BM`, BM", BM‴ auf. Die verschiedenen Betriebsmodi BM', BM", BM‴ weisen die verschiedenen maximalen Drehzahlen MD`, MD", MD‴, die verschiedenen Drehzahlbereiche DB', DB", DB‴, die verschiedenen Motorbedienelementbetätigungs-Drehzahl-Kennlinien MDK`, MDK", MDK‴ und die verschiedenen maximale Leistungen MP', MP", MP‴ auf.

Weiter ist im gezeigten Ausführungsbeispiel das Garten-, Forst- und/oder Baubearbeitungsgerät 1 ein Freischneider 1'. In alternativen Ausführungsbeispielen kann das Garten-, Forst- und/oder Baubearbeitungsgerät eine Säge, ein Hoch-Entaster, eine Heckenschere, ein Heckenschneider, ein Blasgerät, ein Laubbläser, eine Astschere, ein Trennschleifer, ein Kehrgerät, eine Kehrwalze, eine Kehrbürste, ein Rasenmäher, ein Vertikutierer, eine Grasschere, eine Kreiselschere oder ein Olivenernter sein.

Zudem weist das Garten-, Forst- und/oder Baubearbeitungsgerät 1 eine, insbesondere elektrische, Ausgabeeinrichtung 10 auf, im gezeigten Ausführungsbeispiel in Form von, insbesondere drei, Leuchtdioden 10a, 10b, 10c Die Ausgabeeinrichtung 10, insbesondere in dem aktiven Zustand on des Garten-, Forst- und/oder Baubearbeitungsgeräts 1, insbesondere der Steuereinrichtung 11, ist zum Ausgeben einer Information Info über den aktiven Zustand on, die Einstellung El, eine Betätigung des Motorbedienelements 4, insbesondere vor einem Versetzen des Garten-, Forst- und/oder Baubearbeitungsgeräts 1, insbesondere der Steuereinrichtung 11, in den aktiven Zustand on, und eine Erkennung mittels des Anwesenheitserkennungselements 6 ausgebildet.

In dem in Fig. 2a gezeigten inaktiven Zustand off sind die Leuchtdioden 10a, 10b, 10c aus bzw. blinken oder leuchten kontinuierlich nicht. In dem in Fig. 2b und 2d gezeigten aktiven Zustand on mit ablaufender Zeitdauer t1, t2 blinken die Leuchtdioden 10a, 10b der, insbesondere letzten bzw. derzeitigen, Einstellung El, insbesondere der letzten maximalen Drehzahl MD", des letzten Drehzahlbereichs DB", der letzten Motorbedienelementbetätigungs-Drehzahl-Kennlinie MDK", der letzten maximalen Leistung MP" und des letzten Betriebsmodus BM". In dem in Fig. 2c, 3a und 3b gezeigten aktiven Zustand on bei Erkennung mittels des Anwesenheitserkennungselements 6 leuchten kontinuierlich die Leuchtdioden 10a, 10b der, insbesondere letzten bzw. derzeitigen, Einstellung EI. Falls das Motorbedienelement 4 betätigt ist, bevor das Garten-, Forst- und/oder Baubearbeitungsgerät 1, insbesondere die Steuereinrichtung 11, in den aktiven Zustand on versetzt wird, leuchten kontinuierlich die Leuchtdioden 10a, 10b der, insbesondere letzten bzw. derzeitigen, Einstellung El, aber der Antriebsmotor 3 wird nicht betrieben.

Im Detail ist die Steuereinrichtung 11 zum Steuern der Ausgabeeinrichtung 10 ausgebildet.

Wie die gezeigten und zuvor beschriebenen Ausführungsbeispiele deutlich machen, stellt die Erfindung ein handgeführtes Garten-, Forst- und/oder Baubearbeitungsgerät bereit, das verbesserte Eigenschaften aufweist. Des Weiteren stellt die Erfindung ein Verfahren für ein solches handgeführtes Garten-, Forst- und/oder Baubearbeitungsgerät bereit.

## Patentansprüche

1. Handgeführtes Garten-, Forst- und/oder Baubearbeitungsgerät (1), wobei das Garten-, Forst- und/oder Baubearbeitungsgerät (1) aufweist:
- einen inaktiven Zustand (off), einen aktiven Zustand (on) und eine veränderbare Einstellung (El), und
- ein benutzerbetätigbares Gerätebedienelement (2),
- wobei das Garten-, Forst- und/oder Baubearbeitungsgerät (1) in dem inaktiven Zustand (off) zum Versetzen in den aktiven Zustand (on) ausgelöst durch eine Betätigung des Gerätebedienelements (2) ausgebildet ist, und das Garten-, Forst- und/oder Baubearbeitungsgerät (1) in dem aktiven Zustand (on) zum Verändern der Einstellung (EI) und nicht zum Versetzen in den inaktiven Zustand (off) ausgelöst durch eine Betätigung des Gerätebedienelements (2) ausgebildet ist, wobei das Garten-, Forst- und/oder Baubearbeitungsgerät (1) aufweist:
- einen, insbesondere elektrischen, Antriebsmotor (3), wobei der Antriebsmotor (3) zum Antrieb des Garten-, Forst- und/oder Baubearbeitungsgeräts (1) ausgebildet ist, und
- ein benutzerbetätigbares Motorbedienelement (4),
- wobei das Garten-, Forst- und/oder Baubearbeitungsgerät (1) in dem aktiven Zustand (on) zum Betreiben des Antriebsmotors (3) abhängig von einer Betätigung des Motorbedienelements (4) und in dem inaktiven Zustand (off) nicht zum Betreiben des Antriebsmotors (3) unabhängig von einer Betätigung des Motorbedienelements (4) ausgebildet ist,
- wobei das Garten-, Forst- und/oder Baubearbeitungsgerät (1) dazu ausgebildet ist, falls das Motorbedienelement (4) betätigt ist, bevor das Garten-, Forst- und/oder Baubearbeitungsgerät (1) in den aktiven Zustand (on) versetzt wird, nicht den Antriebsmotor (3) zu betreiben, und falls das Motorbedienelement (4) betätigt wird, nachdem das Garten-, Forst- und/oder Baubearbeitungsgerät (1) in den aktiven Zustand (on) versetzt ist, den Antriebsmotor (3) zu betreiben, und wobei das Garten-, Forst- und/oder Baubearbeitungsgerät (1) aufweist:
- eine Steuereinrichtung (11), wobei die Steuereinrichtung (11) den inaktiven Zustand (off), den aktiven Zustand (on) und die veränderbare Einstellung (EI) aufweist, und in dem aktiven Zustand (on) zum Steuern des Antriebsmotors (3) und in dem nichtaktiven Zustand (off) nicht zum Steuern des Antriebsmotors (3) ausgebildet ist.

2. Handgeführtes Garten-, Forst- und/oder Baubearbeitungsgerät (1) nach Anspruch 1,
- wobei das Garten-, Forst- und/oder Baubearbeitungsgerät (1) nicht zum Verändern der Einstellung (EI) bei Betätigung des Motorbedienelements (4), und insbesondere zum Verändern der Einstellung (EI) bei Nicht-Betätigung des Motorbedienelements (4), ausgebildet ist.

3. Handgeführtes Garten-, Forst- und/oder Baubearbeitungsgerät (1) nach einem der vorhergehenden Ansprüche, wobei das Garten-, Forst- und/oder Baubearbeitungsgerät (1) aufweist:
- einen Handgriff (5), und
- ein von dem Motorbedienelement (4) verschiedenes Anwesenheitserkennungselement (6), wobei das Anwesenheitserkennungselement (6) zur Erkennung einer Anwesenheit einer Hand an dem Handgriff (5) ausgebildet ist,
- wobei das Garten-, Forst- und/oder Baubearbeitungsgerät (1) in dem aktiven Zustand (on) zum Betreiben des Antriebsmotors (3) abhängig von einer Erkennung mittels des Anwesenheitserkennungselements (6) ausgebildet ist.

4. Handgeführtes Garten-, Forst- und/oder Baubearbeitungsgerät (1) nach Anspruch 3,
- wobei das Motorbedienelement (4) als ein benutzerbewegliches Motorbedienelement (4`) ausgebildet ist, und
- wobei das Garten-, Forst- und/oder Baubearbeitungsgerät (1) zum Sperren einer Bewegung des Motorbedienelements (4'), insbesondere falls das Motorbedienelement (4`) nicht bewegt ist, bei Nicht-Erkennung mittels des Anwesenheitserkennungselements (6) ausgebildet ist.

5. Handgeführtes Garten-, Forst- und/oder Baubearbeitungsgerät (1) nach einem der vorhergehenden Ansprüche, insbesondere nach Anspruch 3 oder 4,
- wobei das Gerätebedienelement (2) und das Motorbedienelement (4) zur gleichzeitigen Betätigung durch eine Hand, und insbesondere das Anwesenheitserkennungselement (6) zur gleichzeitigen Erkennung der Anwesenheit der Hand, angeordnet sind.

6. Handgeführtes Garten-, Forst- und/oder Baubearbeitungsgerät (1) nach Anspruch 3 oder 4,
- wobei das Gerätebedienelement (2) als ein benutzerbewegliches Gerätebedienelement (2`) ausgebildet ist, und wobei das Garten-, Forst- und/oder Baubearbeitungsgerät (1) ein Geräterückstellelement (7) aufweist, wobei das Geräterückstellelement (7) zur Kraftbeaufschlagung des Gerätebedienelements (2`) zur Rückstellung einer Bewegung des Gerätebedienelements (2') ausgebildet ist, und/oder
- wobei das Motorbedienelement (4) als das benutzerbewegliche Motorbedienelement (4') ausgebildet ist, und wobei das Garten-, Forst- und/oder Baubearbeitungsgerät (1) ein Motorrückstellelement (8) aufweist, wobei das Motorrückstellelement (8) zur Kraftbeaufschlagung des Motorbedienelements (4`) zur Rückstellung einer Bewegung des Motorbedienelements (4`) ausgebildet ist, und/oder
- wobei das Anwesenheitserkennungselement (6) als ein benutzerbewegliches Anwesenheitserkennungselement ausgebildet ist, und wobei das Garten-, Forst- und/oder Baubearbeitungsgerät (1) ein Erkennungsrückstellelement (9) aufweist, wobei das Erkennungsrückstellelement (9) zur Kraftbeaufschlagung des Anwesenheitserkennungselements (6') zur Rückstellung einer Bewegung des Anwesenheitserkennungselements (6') ausgebildet ist.

7. Handgeführtes Garten-, Forst- und/oder Baubearbeitungsgerät (1) nach Anspruch 3 oder 4,
- wobei das Garten-, Forst- und/oder Baubearbeitungsgerät (1) in dem aktiven Zustand (on) zum selbstständigen Versetzen in den inaktiven Zustand (off) ausgebildet ist,
- ausgelöst durch Ablauf einer vorgegebenen Zeitdauer (t1) seit einem Versetzen in den aktiven Zustand (on) bei Nicht-Betätigung des Gerätebedienelements (2) und/oder Nicht-Betätigung des Motorbedienelements (4) und/oder Nicht-Erkennung mittels des Anwesenheitserkennungselements (6), oder
- ausgelöst durch Ablauf einer vorgegebenen Zeitdauer (t2) seit einem Ende einer Betätigung des Gerätebedienelements (2) und/oder einer Betätigung des Motorbedienelements (4) und/oder einer Erkennung mittels des Anwesenheitserkennungselements (6) in dem aktiven Zustand (on), oder
- ausgelöst durch Nicht-Betätigung des Motorbedienelements nach einer Betätigung des Motorbedienelements und/oder Nicht-Erkennung mittels des Anwesenheitserkennungselements nach einer Erkennung mittels des Anwesenheitserkennungselements in dem aktiven Zustand.

8. Handgeführtes Garten-, Forst- und/oder Baubearbeitungsgerät (1) nach einem der vorhergehenden Ansprüche,
- wobei das Garten-, Forst- und/oder Baubearbeitungsgerät (1) den, insbesondere elektrischen, Antriebsmotor (3) aufweist, wobei der Antriebsmotor (3) zum Antrieb des Garten-, Forst- und/oder Baubearbeitungsgeräts (1) ausgebildet ist, und
- wobei die Einstellung (EI) eine Betriebseinstellung (BEI) zum Betreiben des Antriebsmotors (3) ist.

9. Handgeführtes Garten-, Forst- und/oder Baubearbeitungsgerät (1) nach Anspruch 8, und insbesondere nach einem der Ansprüche 1 bis 5,
- wobei die Betriebseinstellung (BEI) verschiedene maximale Drehzahlen (MD', MD", MD‴), verschiedene Drehzahlbereiche (DB', DB", DB‴), verschiedene Motorbedienelementbetätigungs-Drehzahl-Kennlinien (MDK', MDK", MDK‴), verschiedene maximale Leistungen (MP', MP", MP‴) und/oder verschiedene Betriebsmodi (BM', BM", BM‴) des Antriebsmotors (3) aufweist.

10. Handgeführtes Garten-, Forst- und/oder Baubearbeitungsgerät (1) nach einem der vorhergehenden Ansprüche,
- wobei das Garten-, Forst- und/oder Baubearbeitungsgerät (1) eine Säge, ein Hoch-Entaster, ein Freischneider (1'), eine Heckenschere, ein Heckenschneider, ein Blasgerät, ein Laubbläser, eine Astschere, ein Trennschleifer, ein Kehrgerät, eine Kehrwalze, eine Kehrbürste, ein Rasenmäher, ein Vertikutierer, eine Grasschere, eine Kreiselschere oder ein Olivenernter ist.

11. Handgeführtes Garten-, Forst- und/oder Baubearbeitungsgerät (1) nach Anspruch 3 oder 4, wobei das Garten-, Forst- und/oder Baubearbeitungsgerät (1) aufweist:
- eine Ausgabeeinrichtung (10), wobei die Ausgabeeinrichtung (10), insbesondere in dem aktiven Zustand (on) des Garten-, Forst- und/oder Baubearbeitungsgeräts (1), zum Ausgeben einer Information (Info) über den aktiven Zustand (on), die Einstellung (El), eine Betätigung des Motorbedienelements (4), insbesondere vor einem Versetzen des Garten-, Forst- und/oder Baubearbeitungsgeräts (1) in den aktiven Zustand (on), und/oder eine Erkennung mittels des Anwesenheitserkennungselements (6) ausgebildet ist.

12. Verfahren für ein handgeführtes Garten-, Forst- und/oder Baubearbeitungsgerät (1) nach einem der vorhergehenden Ansprüche, wobei das Verfahren die Schritte aufweist:
a) In dem inaktiven Zustand (off) des Garten-, Forst- und/oder Baubearbeitungsgeräts (1) Versetzen in den aktiven Zustand (on) ausgelöst durch eine Betätigung des Gerätebedienelements (2), und
b) In dem aktiven Zustand (on) des Garten-, Forst- und/oder Baubearbeitungsgeräts (1) Verändern der Einstellung (EI) und nicht Versetzen in den inaktiven Zustand (off) ausgelöst durch eine Betätigung des Gerätebedienelements (2).

## Claims

1. Hand-guided garden, forestry and/or construction working apparatus (1), wherein the garden, forestry and/or construction working apparatus (1) has:
- an inactive state (off), an active state (on) and a variable setting (EI), and
- an apparatus operator control element (2) which can be activated by a user,
- wherein in the inactive state (off) the garden, forestry and/or construction working apparatus (1) is designed to be transferred into the active state (on) triggered by activation of the apparatus operator control element (2), and wherein in the active state (on) the garden, forestry and/or construction working apparatus (1) is designed to change the setting (EI) and not to be transferred into the inactive state (off) triggered by activation of the apparatus operator control element (2),
wherein the garden, forestry and/or construction working apparatus (1) has:
- an, in particular electric, drive motor (3), wherein the drive motor (3) is designed to drive the garden, forestry and/or construction working apparatus (1), and
- a motor operator control element (4) which can be activated by a user,
- wherein in the active state (on) the garden, forestry and/or construction working apparatus (1) is designed to operate the drive motor (3) in accordance with activation of the motor operator control element (4) and in the inactive state (off) is designed not to operate the drive motor (3) irrespective of activation of the motor operator control element (4),
- wherein the garden, forestry and/or construction working apparatus (1) is designed, if the motor operator control element (4) is activated, before the garden, forestry and/or construction working apparatus (1) is transferred into the active state (on), not to operate the drive motor (3), and if the motor operator control element (4) is activated, after the garden, forestry and/or construction working apparatus (1) is transferred into the active state (on), to operate the drive motor (3), and
wherein the garden, forestry and/or construction working apparatus (1) has:
- a control device (11), wherein the control device (11) has the inactive state (off), the active state (on) and the variable setting (EI), and in the active state (on) is designed to control the drive motor (3), and in the inactive state (off) is designed not to control the drive motor (3).

2. Hand-guided garden, forestry and/or construction working apparatus (1) according to Claim 1,
- wherein the garden, forestry and/or construction working apparatus (1) is designed not to change the setting (EI) when the motor operator control element (4) is activated, and is designed in particular to change the setting (EI) when the motor operator control element (4) is not activated.

3. Hand-guided garden, forestry and/or construction working apparatus (1) according to one of the preceding claims, wherein the garden, forestry and/or construction working apparatus (1) has:
- a handle (5) and
- a presence-detection element (6) which is different from the motor operator control element (4), wherein the presence-detection element (6) is designed to detect the presence of a hand on the handle (5),
- wherein in the active state (on) the garden, forestry and/or construction working apparatus (1) is designed to operate the drive motor (3) in accordance with detection by means of the presence-detection element (6).

4. Hand-guided garden, forestry and/or construction working apparatus (1) according to Claim 3,
- wherein the motor operator control element (4) is embodied as a motor operator control element (4') which can be moved by a user, and
- wherein the garden, forestry and/or construction working apparatus (1) is designed to lock a movement of the motor operator control element (4'), in particular if the motor operator control element (4') is not moved, in the case of non-detection by means of the presence-detection element (6).

5. Hand-guided garden, forestry and/or construction working apparatus (1) according to one of the preceding claims, in particular according to Claim 3 or 4,
- wherein the apparatus operator control element (2) and the motor operator control element (4) are arranged for simultaneous activation by a hand, and in particular the presence-detection element (6) is arranged for simultaneous detection of the presence of the hand.

6. Hand-guided garden, forestry and/or construction working apparatus (1) according to Claim 3 or 4,
- wherein the apparatus operator control element (2) is embodied as an apparatus operator control element (2') which can be moved by a user, and wherein the garden, forestry and/or construction working apparatus (1) has an apparatus resetting element (7), wherein the apparatus resetting element (7) is designed to apply force to the apparatus operator control element (2') for the purpose of resetting a movement of the apparatus operator control element (2'), and/or
- wherein the motor operator control element (4) is embodied as the motor operator control element (4') which can be moved by a user, and wherein the garden, forestry and/or construction working apparatus (1) has a motor-resetting element (8), wherein the motor-resetting element (8) is designed to apply force to the motor operator control element (4') for the purpose of resetting a movement of the motor operator control element (4'), and/or
- wherein the presence-detection element (6) is embodied as a presence-detection element which can be moved by a user, and wherein the garden, forestry and/or construction working apparatus (1) has a detection-resetting element (9), wherein the detection-resetting element (9) is designed to apply force to the presence-detection element (6') for the purpose of resetting a movement of the presence-detection element (6').

7. Hand-guided garden, forestry and/or construction working apparatus (1) according to Claim 3 or 4,
- wherein in the active state (on) the garden, forestry and/or construction working apparatus (1) is designed to be transferred automatically into the inactive state (off),
- triggered by the expiry of a predefined time period (t1) since transfer into the active state (on) when the apparatus operator control element (2) is not activated and/or the motor operator control element (4) is not activated and/or in the case of non-detection by means of the presence-detection element (6), or
- triggered by the expiry of a predefined time period (t2) since an end of an activation of the apparatus operator control element (2) and/or activation of the motor operator control element (4) and/or detection by means of the presence-detection element (6) in the active state (on), or
- triggered by non-activation of the motor operator control element after activation of the motor operator control element and/or non-detection by means of the presence-detection element after detection by means of the presence-detection element in the active state.

8. Hand-guided garden, forestry and/or construction working apparatus (1) according to one of the preceding claims,
- wherein the garden, forestry and/or construction working apparatus (1) has the, in particular electric, drive motor (3), wherein the drive motor (3) is designed to drive the garden, forestry and/or construction working apparatus (1), and
- wherein the setting (EI) is an operational setting (BEI) for the purpose of operating the drive motor (3).

9. Hand-guided garden, forestry and/or construction working apparatus (1) according to Claim 8, and in particular according to one of Claims 1 to 5,
- wherein the operational setting (BEI) has different maximum rotational speeds (MD', MD", MD‴), different rotational speed ranges (DB', DB", DB‴), different motor operator control element activation rotational-speed characteristic curves (MDK', MDK", MDK‴), different maximum power levels (MP', MP'', MP‴) and/or different operating modes (BM', BM", BM‴) of the drive motor (3).

10. Hand-guided garden, forestry and/or construction working apparatus (1) according to one of the preceding claims,
- wherein the garden, forestry and/or construction working apparatus (1) is a saw, a pole-mounted power pruner, a brush cutter (1'), hedge clippers, hedge cutters, a blower, a leaf blowing machine, branch shears, an angle grinder, a sweeper, a sweeper roller, a sweeping brush, a lawnmower, a scarifier, grass trimmers, a circular shear or an olive harvester.

11. Hand-guided garden, forestry and/or construction working apparatus (1) according to Claim 3 or 4, wherein the garden, forestry and/or construction working apparatus (1) has:
- an output device (10), wherein the output device (10) is designed, in particular in the active state (on) of the garden, forestry and/or construction working apparatus (1) to output information (Info) about the active state (on), the setting (El), activation of the motor operator control element (4), in particular before a transfer of the garden, forestry and/or construction working apparatus (1) into the active state (on), and/or detection by means of the presence-detection element (6).

12. Method for a hand-guided garden, forestry and/or construction working apparatus (1) according to one of the preceding claims, wherein the method has the steps:
a) in the inactive state (off) of the garden, forestry and/or construction working apparatus (1), transferring into the active state (on) triggered by activation of the apparatus operator control element (2), and
b) in the active state (on) of the garden, forestry and/or construction working apparatus (1), changing of the setting (EI) and non-transferring into the inactive state (off) triggered by activation of the apparatus operator control element (2).

## Revendications

1. Appareil portatif (1) de jardinage, de sylviculture et/ou de traitement de bâtiment, l'appareil (1) de jardinage, de sylviculture et/ou de traitement de bâtiment comprenant :
- un état inactif (off), un état actif (on) et un réglage modifiable (EI), et
- un élément (2) de commande apte à être actionné par l'utilisateur,
- l'appareil (1) de jardinage, de sylviculture et/ou de traitement de bâtiment étant conçu de façon à être commuté de l'état inactif (off), à l'état actif (on) par un actionnement de l'élément (2) de commande de l'appareil, et
l'appareil (1) de jardinage, de sylviculture et/ou de traitement de bâtiment étant conçu de façon à être commuté dans l'état actif (on), afin de modifier le réglage (EI) et non pour passer à l'état inactif (off) par un actionnement de l'élément (2) de commande de l'appareil,
l'appareil (1) de jardinage, de sylviculture et/ou de traitement de bâtiment comprenant :
- un moteur d'entraînement (3), en particulier électrique, le moteur d'entraînement (3) étant conçu de façon à entraîner l'appareil (1) de jardinage, de sylviculture et/ou de traitement de bâtiment, et
- un élément (4) de commande de moteur apte à être actionné par l'utilisateur,
- l'appareil (1) de jardinage, de sylviculture et/ou de traitement de bâtiment étant, à l'état actif (on), conçu de façon à faire fonctionner le moteur d'entraînement (3) en fonction d'un actionnement de l'élément (4) de commande de moteur et, à l'état inactif (off), de façon à ne pas faire fonctionner le moteur d'entraînement (3) indépendamment d'un actionnement de l'élément (4) de commande de moteur,
- l'appareil (1) de jardinage, de sylviculture et/ou de traitement de bâtiment étant conçu pour, si l'élément (4) de commande de moteur est actionné avant que l'appareil (1) de jardinage, de sylviculture et/ou de traitement de bâtiment ne soit placé dans l'état actif (on), ne pas actionner le moteur d'entraînement (3), et, si l'élément (4) de commande de moteur est actionné après que l'appareil (1) de jardinage, de sylviculture et/ou de traitement de bâtiment ait été placé dans l'état actif (on), pour actionner le moteur d'entraînement (3), et l'appareil (1) de jardinage, de sylviculture et/ou de traitement de bâtiment comprenant :
- un dispositif de commande (11), le dispositif de commande (11) présentant l'état inactif (off), l'état actif (on) et le réglage modifiable (EI), et étant conçu pour, dans l'état actif (on), commander le moteur d'entraînement (3) et dans l'état non actif (off) pour ne pas commander le moteur d'entraînement (3).

2. Appareil portatif (1) de jardinage, de sylviculture et/ou de traitement de bâtiment selon la revendication 1,
- l'appareil (1) de jardinage, de sylviculture et/ou de traitement de bâtiment n'étant pas conçu de façon à modifier le réglage (EI) lorsque l'élément (4) de commande du moteur est actionné, et en particulier pour modifier le réglage (EI) lorsque l'élément (4) de commande du moteur n'est pas actionné.

3. Appareil portatif (1) de jardinage, de sylviculture et/ou de traitement de bâtiment selon l'une des revendications précédentes, ledit appareil (1) de jardinage, de sylviculture et/ou de traitement de bâtiment comprenant :
- une poignée (5), et
- un élément (6) de détection de présence distinct de l'élément (4) de commande de moteur, l'élément (6) de détection de présence étant configuré pour détecter la présence d'une main sur la poignée (5),
- dans lequel l'appareil (1) de jardinage, de sylviculture et/ou de traitement de bâtiment est conçu, à l'état actif (on), pour faire fonctionner le moteur d'entraînement (3) en fonction d'une détection au moyen de l'élément (6) de détection de présence.

4. Appareil portatif (1) de jardinage, de sylviculture et/ou de traitement de bâtiment selon la revendication 3,
- l'élément (4) de commande de moteur étant conçu sous la forme d'un élément (4') de commande de moteur déplaçable par l'utilisateur, et
- l'appareil (1) de jardinage, de sylviculture et/ou de traitement de bâtiment étant conçu de façon à bloquer un mouvement de l'élément (4') de commande de moteur, en particulier si l'élément (4') de commande de moteur n'est pas déplacé, en cas de non-détection de présence au moyen de l'élément (6) de détection de présence.

5. Appareil portatif (1) de jardinage, de sylviculture et/ou de traitement de bâtiment selon l'une des revendications précédentes, notamment selon la revendication 3 ou la revendication 4,
- l'élément (2) de commande de l'appareil et l'élément (4) de commande du moteur étant agencés de façon à être actionnés simultanément par une main, et en particulier l'élément (6) de détection de présence étant agencé pour détecter simultanément la présence de la main.

6. Appareil portatif (1) de jardinage, de sylviculture et/ou de traitement de bâtiment selon la revendication 3 ou la revendication 4,
- dans lequel l'élément (2) de commande de l'appareil est conçu sous la forme d'un élément (2') de commande de l'appareil déplaçable par l'utilisateur, et dans lequel l'appareil (1) de jardinage, de sylviculture et/ou de traitement de bâtiment présente un élément (7) de rappel d'appareil, l'élément (7) de rappel d'appareil étant conçu de façon à appliquer une force à l'élément (2') de commande de l'appareil afin de rappeler un mouvement de l'élément (2') de commande de l'appareil, et/ou
- l'élément (4) de commande de moteur étant conçu sous la forme de l'élément (4') de commande de moteur déplaçable par l'utilisateur, et l'appareil (1) de jardinage, de sylviculture et/ou de traitement de bâtiment présentant un élément (8) de rappel de moteur, l'élément (8) de rappel de moteur étant conçu de façon à appliquer une force à l'élément (4') de commande de moteur afin de rappeler un mouvement de l'élément (4') de commande de moteur, et/ou
- l'élément (6) de détection de présence étant conçu sous la forme d'un élément de détection de présence déplaçable par l'utilisateur, et l'appareil (1) de jardinage, de sylviculture et/ou de traitement de bâtiment présentant un élément (9) de rappel de détection, l'élément (9) de rappel de détection étant conçu de façon à appliquer une force à l'élément (6') de détection de présence afin de rappeler un mouvement de l'élément (6') de détection de présence.

7. Appareil portatif (1) de jardinage, de sylviculture et/ou de traitement de bâtiment selon la revendication 3 ou la revendication 4,
- l'appareil (1) de jardinage, de sylviculture et/ou de traitement de bâtiment étant conçu, à l'état actif (on), pour se mettre automatiquement dans l'état inactif (off),
- déclenché par l'écoulement d'une durée prédéfinie (t1) depuis un passage à l'état actif (on) en cas de non-actionnement de l'élément (2) de commande de l'appareil et/ou de non-actionnement de l'élément (4) de commande du moteur et/ou de non-détection au moyen de l'élément (6) de détection de présence, ou
- déclenché par l'écoulement d'une durée prédéterminée (t2) depuis la fin d'un actionnement de l'élément (2) de commande de l'appareil et/ou d'un actionnement de l'élément (4) de commande du moteur et/ou d'une détection au moyen de l'élément (6) de détection de présence dans l'état actif (on), ou
- déclenché par le non-actionnement de l'élément de commande du moteur après un actionnement de l'élément de commande du moteur et/ou la non-détection au moyen de l'élément de détection de présence après une détection au moyen de l'élément de détection de présence dans l'état actif.

8. Appareil portatif (1) de jardinage, de sylviculture et/ou de traitement de bâtiment selon l'une des revendications précédentes,
- l'appareil (1) de jardinage, de sylviculture et/ou de traitement de bâtiment comportant le moteur d'entraînement (3), notamment électrique, le moteur d'entraînement (3) étant conçu de façon à entraîner l'appareil (1) de jardinage, de sylviculture et/ou de traitement de bâtiment, et
- le réglage (EI) étant un réglage de fonctionnement (BEI) pour faire fonctionner le moteur d'entraînement (3) .

9. Appareil (1) portatif de jardinage, de sylviculture et/ou de traitement de bâtiment selon la revendication 8, et notamment selon l'une des revendications 1 à 5,
- dans lequel le réglage de fonctionnement (BEI) comprend différentes vitesses de rotation maximales (MD', MD'', MD'''), différentes plages de vitesses de rotation (DB', DB", DB‴), différentes caractéristiques d'actionnement de l'élément de commande du moteur en fonction de la vitesse de rotation (MDK', MDK", MDK‴), différentes puissances maximales (MP', MP'', MP" '') et/ou différents modes de fonctionnement (BM', BM'', BM''') du moteur d'entraînement (3).

10. Appareil portatif (1) de jardinage, de sylviculture et/ou de traitement de bâtiment selon l'une des revendications précédentes,
- l'appareil (1) de jardinage, de sylviculture et/ou de traitement de bâtiment étant une scie, une élagueuse haute, une débroussailleuse (1'), une cisaille à haies, un taille-haies, un souffleur, un souffleur de feuilles, un élagueur, une tronçonneuse à disque, une balayeuse, un rouleau de balayage, une brosse de balayage, une tondeuse à gazon, un scarificateur, une cisaille à herbe, une cisaille rotative ou une récolteuse d'olives.

11. Appareil portatif (1) de jardinage, de sylviculture et/ou de traitement de bâtiment selon la revendication 3 ou la revendication 4, dans lequel l'appareil (1) de jardinage, de sylviculture et/ou de traitement de bâtiment présente :
- un dispositif de sortie (10), le dispositif de sortie (10) étant conçu, en particulier à l'état actif (on) de l'appareil (1) de jardinage, de sylviculture et/ou de traitement de bâtiment, pour émettre une information (Info) sur l'état actif (on), le réglage (EI), un actionnement de l'élément (4) de commande du moteur, en particulier avant que l'appareil (1) de jardinage, de sylviculture et/ou de traitement de bâtiment ne soit mis à l'état actif (on), et/ou la détection au moyen de l'élément (6) de détection de présence.

12. Procédé pour un appareil portatif (1) de jardinage, de sylviculture et/ou de traitement de bâtiment selon l'une des revendications précédentes, le procédé comprenant les étapes suivantes :
a) à l'état inactif (off) de l'appareil (1) de jardinage, de sylviculture et/ou de traitement de bâtiment, passage à l'état actif (on) déclenché par un actionnement de l'élément (2) de commande de l'appareil, et
b) à l'état actif (on) de l'appareil (1) de jardinage, de sylviculture et/ou de traitement de bâtiment, modification du réglage (EI) et non-passage à l'état inactif (off), déclenché par un actionnement de l'élément (2) de commande de l'appareil.
